# NOUVEAU FASCICULE DE BREVET EUROPEEN

(11) **EP 3 060 456 B2**
(45) Date de publication et mention de la décision concernant l'opposition: **09.07.2025**
(45) Mention de la délivrance du brevet: 18.12.2019
(21) Numéro de dépôt: 14855653.3
(22) Date de dépôt: 23.10.2014
(51) Int. Cl.: B60P 1/00, B66F 9/06

(54) **VÉHICULE DE MANUTENTION ET USINE D'ÉLECTROLYSE COMPRENANT CE VÉHICULE**
MANÖVERFAHRZEUG UND ELEKTROLYSEANLAGE MIT DIESEM FAHRZEUG
HANDLING VEHICLE AND ELECTROLYSIS PLANT COMPRISING SAID VEHICLE

(30) Priorité: 25.10.2013 FR 1302482
(43) Date de publication de la demande: 31.08.2016
(73) Titulaire: Rio Tinto Alcan International Limited, Montréal, QC H3B 0E3 (CA)
(72) Inventeur: PRODENT, Stéphane, F-38490 Saint-Ondras (FR); BAYARD, Christophe, F-38500 Voiron (FR); RUGET, Gabriel, F-38760 Varces-Allières-et-Risset (FR)
(74) Mandataire: Germain Maureau
(86) Numéro de dépôt international: PCT/IB2014/002222
(87) Numéro de publication internationale: WO 2015/059556

(56) Documents cités:
- EP-A1- 2 302 416
- EP-A1- 2 336 075
- EP-A1- 2 386 876
- EP-A1- 2 428 862
- EP-A1- 2 515 143
- EP-A2- 0 916 615
- CA-A1- 2 827 735
- CN-Y- 2 795 178
- CN-Y- 2 795 178
- DE-A1- 102011 085 019
- DE-A1- 102011 109 532
- DE-A1- 4 218 041
- DE-A1- 4 234 375
- DE-B4- 102004 047 209
- DE-U1- 202005 004 466
- DE-U1- 29 724 786
- US-A- 5 938 710
- US-A1- 2008 071 429
- US-A1- 2008 071 429
- US-A1- 2011 077 814

## Description

La présente invention concerne un véhicule de manutention, notamment un véhicule de manutention destiné à déplacer une charge comme un ensemble anodique ou un récipient de coulée d'une usine d'électrolyse, et une usine d'électrolyse, notamment une aluminerie, comprenant ce véhicule.

Le document DE 29724786 U1 divulgue un transporteur avec des moyens de détection d'obstacle à distance et par contact qui est guidé en position par des capteurs et un ordinateur. Traditionnellement, une usine d'électrolyse comme une aluminerie comprend un bâtiment abritant un hall d'électrolyse, dans lequel sont alignées des centaines de cuves d'électrolyse destinées à la production d'aluminium par électrolyse selon le procédé de Hall-Héroult.

A cet effet, les cuves d'électrolyse comprennent classiquement un caisson en acier à l'intérieur duquel est agencé un revêtement en matériaux réfractaires, une cathode en matériau carboné, traversée par des conducteurs cathodiques destinés à collecter le courant d'électrolyse à la cathode pour le conduire jusqu'à des sorties cathodiques traversant le fond ou les côtés du caisson, des conducteurs d'acheminement s'étendant sensiblement horizontalement jusqu'à la cuve suivante depuis les sorties cathodiques, un bain électrolytique dans lequel est dissout l'alumine, au moins un ensemble anodique comportant au moins une anode plongée dans ce bain électrolytique et une tige anodique scellée dans l'anode, un cadre anodique auquel est suspendu l'ensemble anodique via la tige anodique, et des conducteurs de montée du courant d'électrolyse, s'étendant de bas en haut, reliés aux conducteurs d'acheminement de la cuve d'électrolyse précédente pour acheminer le courant d'électrolyse depuis les sorties cathodiques jusqu'au cadre anodique et à l'ensemble anodique et l'anode de la cuve suivante. Les anodes sont plus particulièrement de type anodes précuites avec des blocs carbonés précuits, c'est-à-dire cuits avant introduction dans la cuve d'électrolyse.

Au cours de la réaction d'électrolyse se forme une nappe d'aluminium liquide au fond de la cuve d'électrolyse. L'aluminium liquide ainsi produit est régulièrement collecté dans des récipients de coulée, également appelés poches de coulée. L'aluminium liquide ainsi collecté est ensuite transporté jusqu'à une fonderie pour y être traité.

Par ailleurs, toujours au cours de la réaction d'électrolyse, les anodes sont progressivement consommées. Il est donc nécessaire de prévoir une évacuation des ensembles anodiques usés et un approvisionnement régulier des cuves d'électrolyse en ensembles anodiques neufs destinés à remplacer les ensembles anodiques usés.

Les ensembles anodiques et les récipients de coulée peuvent peser plusieurs tonnes. Sans une sécurité adéquate, leur transport peut donc engendrer des accidents préjudiciables aux personnes et aux biens.

Le transport des ensembles anodiques et des récipients de coulée est assuré par des véhicules pilotés par un opérateur conducteur. Pour limiter les risques d'accident, ces véhicules comprennent des moyens pour brider leur vitesse afin que celle-ci ne puisse dépasser une vitesse maximale prédéterminée.

Toutefois, compte-tenu de la masse des charges à déplacer, ces véhicules présentent des dimensions importantes qui peuvent altérer la visibilité des opérateurs conducteurs, et du personnel à pied, notamment lors de manoeuvres difficiles.

Il est connu d'équiper des véhicules avec des systèmes de détection capables de détecter un obstacle dans une zone de détection prédéterminée, et de commander l'arrêt du véhicule pour éviter une collision lorsqu'un obstacle est détecté.

Cependant, cette zone de détection est prédéfinie et indépendante de la cinématique du véhicule, si bien qu'un tel système de détection et un tel véhicule ne sont adaptés qu'à des environnements figés où les obstacles sont déjà connus par rapport au trajet du véhicule.

En d'autres termes, de tels systèmes ne permettent pas l'évolution du véhicule dans un environnement comprenant des obstacles mobiles comme des piétons ou d'autres véhicules.

Or, les véhicules évoluant dans une usine d'électrolyse évoluent aussi bien en extérieur qu'en intérieur, où intervient régulièrement du personnel à pied ou véhiculé.

De plus, un système de détection avec une zone de détection prédéfinie et immuable, dans un environnement qui combine aussi bien de grandes lignes droites (en extérieur) que des espaces exigus (en intérieur), provoque nécessairement des arrêts intempestifs du véhicule qui en est équipé.

En effet, la zone de détection d'un tel système est par exemple trop large par rapport à la vitesse du véhicule lorsque celui-ci manœuvre en intérieur : au moindre demi-tour du véhicule, la zone de détection rencontrera un obstacle qui n'est pas nécessairement sur la trajectoire du véhicule, ce qui provoquera un arrêt intempestif. De même, en virage, une zone de détection trop grande à l'avant du véhicule risque de considérer une barrière longeant le virage comme un obstacle, alors que cette barrière est hors de la trajectoire du véhicule.

Il est connu du document US20110077814 d'équiper un véhicule avec des moyens de détection d'obstacle capables de détecter un obstacle dans une zone de détection qui dépend de la vitesse de déplacement du véhicule.

Cependant, l'accostage d'une charge par un véhicule est une manœuvre délicate. La charge à accoster ne doit pas être détectée en tant qu'obstacle, si bien que la partie du véhicule destinée à l'accostage est classiquement exempte de moyens de détection d'obstacle. Or, il existe un risque qu'un objet ou une personne s'interpose accidentellement entre le véhicule et sa charge pendant la manœuvre d'accostage.

Aussi, la présente invention vise à pallier tout ou partie de ces inconvénients en proposant un véhicule de manutention offrant la possibilité de détecter un obstacle en toutes circonstances y compris pendant une manœuvre d'accostage, et de se déplacer dans un environnement complexe pouvant inclure des obstacles mobiles, sans arrêts intempestifs, ainsi qu'une usine d'électrolyse présentant une productivité améliorée.

A cet effet, la présente invention a pour objet un véhicule de manutention selon la revendication 1.

Ainsi, le véhicule selon l'invention offre la possibilité d'auto-adapter la forme et les dimensions d'une zone de surveillance en fonction de la cinématique du véhicule, doublée de la possibilité de détecter par contact un obstacle, comme une personne, qui serait coincée entre le véhicule et la charge pendant la manœuvre d'accostage. Le véhicule selon l'invention offre donc une sécurité accrue et la possibilité d'évoluer dans un environnement complexe sans provoquer d'arrêt intempestif.

Les moyens de détection d'obstacle à distance comprennent une pluralité d'unités de détection, chacune destinée à balayer une zone locale de détection, et les unités de détection sont agencées les unes par rapport aux autres de sorte que les zones locales de détection forment ensemble une zone de détection périphérique s'étendant à 360° autour du véhicule.

Ainsi, un périmètre de sécurité entourant le véhicule est délimité pour un maximum de sécurité.

Avantageusement, chaque zone locale de détection présente au moins une portion de recouvrement avec une zone locale de détection adjacente.

Ainsi, la détection d'obstacle est doublée, c'est-à-dire qu'un obstacle entrant dans le périmètre de surveillance est situé sur deux zones locales de détection qui se chevauchent.

Selon un mode de réalisation, la zone de détection périphérique comprend au moins quatre portions de recouvrement, dont une portion de recouvrement avant située devant le véhicule, une portion de recouvrement arrière située derrière le véhicule, et deux portions de recouvrement latérales situées de chaque côté du véhicule.

Ainsi, en n'importe quel point de la zone de surveillance, un obstacle est nécessairement détecté par deux unités de détection, cette redondance apportant davantage de fiabilité pour un haut niveau de sécurité.

Selon un mode de réalisation avantageux, l'unité de traitement détermine à partir des données cinématiques que le véhicule effectue une manœuvre d'accostage et définie une zone (10) de surveillance appropriée lors d'une manœuvre d'accostage. Une telle manœuvre d'accostage peut alors être réalisée de façon automatique, spécifique et sécuritaire.

Selon un mode de réalisation avantageux, les données cinématiques permettant à l'unité de traitement de déterminer que le véhicule effectue une manœuvre d'accostage et définir une zone de surveillance appropriée lors d'une manœuvre d'accostage sont une plage de vitesse prédéterminée dans le sens de la manœuvre d'accostage. Plus particulièrement, la plage de vitesse prédéterminée est comprise entre 0 et 3 km/h et de préférence comprise entre 0.5 et 2 km/h.

Selon un mode de réalisation préféré, les données cinématiques permettant à l'unité de traitement de déterminer que le véhicule effectue une manoeuvre d'accostage et définir une zone de surveillance appropriée lors d'une manœuvre d'accostage comprennent le maintien pendant une durée déterminée d'une vitesse constante prédéfinie. Plus particulièrement, cette vitesse constante prédéfinie peut être comprise entre 0.5 et 2.5 km/h, de préférence entre 1 et 2 km/h, de préférence encore de l'ordre de 1.8 km/h. La tolérance de l'unité de traitement est avantageusement de plus ou moins 0.5 km/h et de préférence de plus ou moins 0.1 km/h. Aussi, la durée déterminée peut être comprise entre 0.1 et 2 secondes, et est de préférence inférieure à 1 seconde.

Selon un mode de réalisation préféré, la zone de surveillance comprend, lors d'une manœuvre d'accostage, une zone inhibée prédéterminée exempte de surveillance par les moyens de détection d'obstacle à distance, la zone inhibée étant située entre le véhicule et la charge à accoster, et les moyens de détection d'obstacle par contact sont agencés pour détecter un obstacle dans la zone inhibée.

Ainsi, un obstacle qui s'interposerait entre le véhicule et la charge à accoster pendant une manœuvre d'accostage serait détecté.

Selon un mode de réalisation préféré, la zone de surveillance comporte au moins deux sous-zones de surveillance qui s'étendent le long de la zone inhibée. Ces sous-zones de surveillance préviennent et empêchent une arrivée de piétons ou d'engins dans la zone inhibée au cours d'une manœuvre d'accostage. La zone inhibée est plus particulièrement rectangulaire et bordée sur chacun de ses cotés par une des deux sous-zones de surveillance, le véhicule ou la charge à accoster.

Selon un mode de réalisation préféré, le véhicule comprend un châssis en forme de U comprenant deux portions latérales sensiblement parallèles entre lesquelles s'étendent les moyens d'accostage et reliées par une portion centrale, et les moyens de détection d'obstacle par contact comprennent un premier organe de détection agencé à l'intérieur du U sur la portion centrale.

Ainsi, cela permet de détecter un obstacle qui serait coincé à l'intérieur du U pendant la manœuvre d'accostage afin d'éviter son écrasement entre le véhicule, notamment sa portion centrale, et la charge accostée.

Selon un mode de réalisation préféré, les moyens de détection d'obstacle par contact comprennent un deuxième organe de détection et un troisième organe de détection agencés à l'extrémité des portions latérales.

Avantageusement, la zone de surveillance comprend au cours d'une manœuvre d'accostage deux sous-zones de surveillance séparées et s'étendant chacune depuis l'extrémité des portions latérales dans une direction sensiblement parallèle à la direction de déplacement du véhicule.

Cela évite ainsi de heurter un objet présent à proximité de la charge à accoster lors d'une manoeuvre d'accostage.

Avantageusement, les sous-zones de surveillance séparées s'étendent depuis le véhicule jusque sur les côtés de la charge à accoster avant que la charge à accoster pénètre à l'intérieur du châssis en forme de U. Le positionnement de ces sous-zones de surveillance prévient et empêche une arrivée de piétons ou d'engins entre le véhicule et la charge à accoster.

Selon un mode de réalisation avantageux, le véhicule comprend des moyens de reconnaissance de forme, destinés à reconnaître la forme de la charge à accoster lors d'une manœuvre d'accostage.

Ainsi, si la forme de la charge à accoster n'est pas reconnue pendant la manoeuvre d'accostage, c'est-à-dire si la forme visualisée au cours d'une manœuvre d'accostage est modifiée par rapport à la forme connue de la charge à déplacer (cette forme est toujours la même), cela signifie qu'une personne ou qu'un objet est situé à proximité de la charge à accoster. Une action sécuritaire, notamment un freinage et arrêt du véhicule, est alors enclenchée. La sécurité est ainsi améliorée.

Selon un mode de réalisation avantageux, les moyens de collecte de donnée cinématique comprennent un capteur de charge permettant de déterminer si le véhicule est chargé ou non chargé. Si le véhicule est déjà chargé, le véhicule ne peut être en train d'effectuer une manœuvre d'accostage.

Selon un mode de réalisation préféré, les moyens de détection d'obstacle à distance et les moyens de détection d'obstacle par contact sont agencés au maximum à 350 mm du sol, notamment à au plus 300 mm du sol, et de préférence à au plus 200 mm du sol.

Ainsi, le véhicule peut détecter un obstacle de faible hauteur reposant sur le sol.

Selon un mode de réalisation préféré, le véhicule comprend des moyens de guidage automatique pour se déplacer de façon autonome dans une usine d'électrolyse, et les moyens de détection d'obstacle à distance et les moyens de détection d'obstacle par contact sont indépendants des moyens de guidage automatique.

Ainsi, en cas de défaillance des moyens de guidage automatique, la détection d'obstacle reste assurée pour un maximum de sécurité.

Selon un autre aspect, la présente invention concerne aussi une usine d'électrolyse, notamment une aluminerie, comprenant au moins un véhicule de manutention ayant les caractéristiques précitées.

Cette aluminerie offre une sécurité accrue. Le risque d'accident préjudiciable aux personnes ou aux biens peut être sensiblement réduit par rapport à une aluminerie traditionnelle, si bien que la productivité et le rendement de l'aluminerie selon l'invention sont améliorés.

D'autres caractéristiques et avantages de la présente invention ressortiront clairement de la description ci-après d'un mode particulier de réalisation de la présente invention, donné à titre d'exemple non limitatif, en référence aux dessins annexés dans lesquels :
- la figure 1 est une vue en perspective d'un véhicule selon un mode de réalisation de l'invention,
- la figure 2 est une vue schématique de dessus d'un véhicule selon un mode de réalisation de l'invention,
- la figure 3 est une vue schématique de dessus d'un véhicule selon un mode de réalisation de l'invention, circulant en ligne droite,
- la figure 4 est une vue schématique de dessus d'un véhicule selon un mode de réalisation de l'invention, circulant dans un virage,
- la figure 5 est une vue schématique de dessus d'un véhicule selon un mode de réalisation de l'invention, circulant en marche arrière,
- les figures 6 et 7 sont des vues schématiques de dessus d'un véhicule selon un mode de réalisation de l'invention, pendant une manoeuvre d'accostage,
- la figure 8 est une vue schématique de dessus d'un véhicule selon un mode de réalisation de l'invention, effectuant un demi-tour.

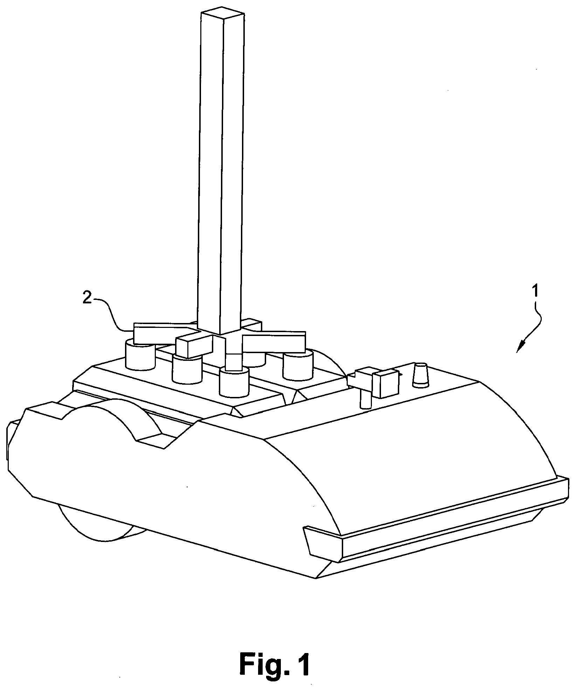

La figure 1 montre un véhicule 1 de manutention selon un mode de réalisation de l'invention.

Le véhicule 1 est destiné à déplacer une charge dans une usine d'électrolyse comme une aluminerie. A titre d'exemple, la charge à déplacer peut être un ensemble 2 anodique ou un récipient de coulée (non représenté) destiné à contenir du métal liquide comme de l'aluminium.

Le véhicule 1 de manutention comprend à cet effet des moyens d'accostage pour accoster la charge à déplacer. Les moyens d'accostage peuvent être destinés à supporter, atteler, fixer, ou arrimer la charge à déplacer.

Les moyens d'accostage comprennent par exemple des cornières 4 en forme de L présentant une surface 6 de support pour supporter une plateforme sur laquelle repose par exemple un ensemble anodique.

Le véhicule 1 de manutention comprend également des moyens de détection d'obstacle à distance, qui seront décrits plus en détails ci-après.

Les moyens de détection d'obstacle à distance sont destinés à balayer une zone 8 de détection adjacente au véhicule 1.

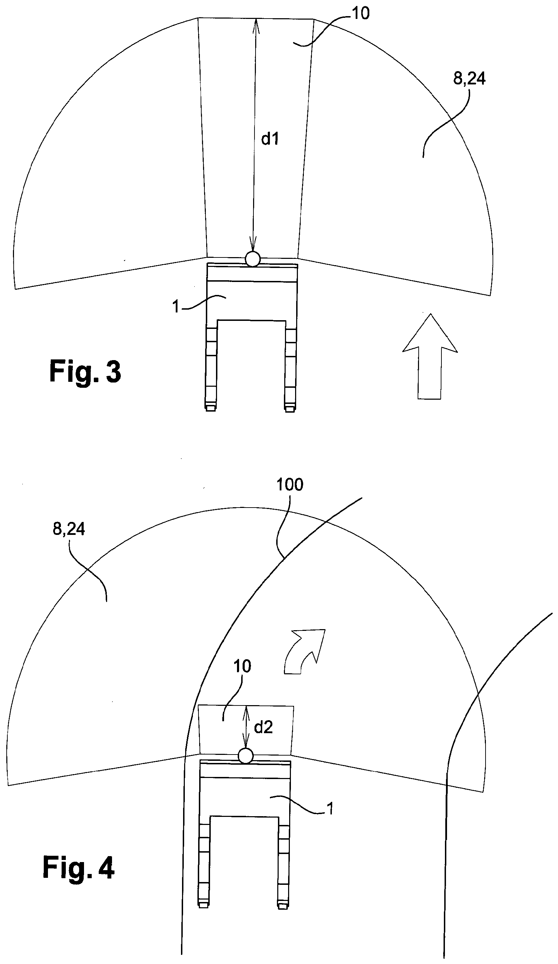

La zone 8 de détection correspond à la zone maximale qui peut être couverte par les moyens de détection d'obstacle à distance. Toutefois, la détection d'un obstacle est effective dans une zone appelée zone 10 de surveillance, non figée, qui correspond à une partie de la zone 8 de détection, comme cela est visible sur les figures 3 à 8.

Le véhicule 1 de manutention comprend aussi des moyens de collecte de donnée cinématique.

Ces moyens de collecte sont destinés à collecter une ou plusieurs données concernant la cinématique du véhicule.

La ou les données cinématiques peuvent être sélectionnées parmi la vitesse du véhicule 1, sa direction, son sens de déplacement, des caractéristiques de freinage du véhicule 1 et/ou la masse du véhicule 1 y compris sa charge.

Les moyens de collecte comprennent par exemple un ou plusieurs encodeurs 12. Le ou les encodeurs 12 peuvent être agencés au niveau d'une ou plusieurs roues 14 du véhicule 1 de manutention.

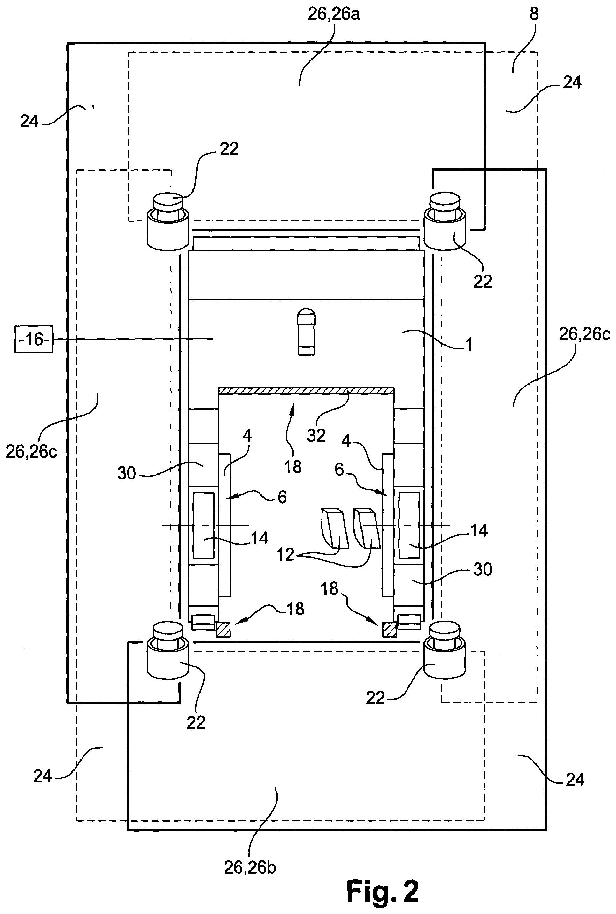

Le véhicule 1 de manutention comprend aussi une unité 16 de traitement, représentée schématiquement sur la figure 2.

L'unité 16 de traitement est destinée à définir, à l'intérieur de la zone 8 de détection, la zone 10 de surveillance à surveiller par les moyens de détection d'obstacle à distance.

Plus précisément, la forme et les dimensions de la zone 10 de surveillance sont calculées par l'unité 16 de traitement en fonction de la ou des données cinématiques fournies par les moyens de collecte.

La forme et les dimensions de la zone 10 de surveillance peuvent être calculées par l'unité 16 de traitement en fonction d'informations supplémentaires optionnelles, comme des informations sur les conditions climatiques extérieures (par exemple pluie). Le véhicule 1 peut notamment comprendre un ou plusieurs capteurs destinés à fournir à l'unité 16 de traitement une ou plusieurs données comme une donnée météorologique (par exemple route mouillée).

Le véhicule comprend des moyens de freinage, destinés à freiner et de préférence arrêter le véhicule en cas d'obstacle détecté dans la zone 10 de surveillance par l'intermédiaire des moyens de détection d'obstacle à distance.

Ces moyens de freinage peuvent comprendre par exemple un ou plusieurs disques de freinage associés à une ou plusieurs roues 14 du véhicule 1.

Ces moyens de freinage peuvent être distincts d'un système de freinage principal utilisé classiquement par le véhicule 1.

Ainsi, par exemple, la zone 10 de surveillance s'étend à l'avant du véhicule 1 de manutention lorsque celui-ci se déplace en marche avant, comme cela est visible sur les figures 3 et 4. Elle correspond sensiblement à une projection de la face avant du véhicule, dans le sens de déplacement du véhicule 1, jusqu'à une distance permettant à celui-ci, compte-tenu de sa vitesse et de ses caractéristiques de freinage ainsi que sa masse (charge comprise le cas échéant), de détecter un obstacle suffisamment tôt pour pouvoir s'arrêter avant de heurter cet obstacle.

Comme on peut le voir sur la figure 2, les moyens de détection d'obstacle à distance comprennent une pluralité d'unités 22 de détection, chacune destinée à balayer une zone locale 24 de détection correspondant à une partie, figée, de la zone 8 de détection. Les zones locales 24 de détection sont représentées schématiquement en traits pleins et pointillés sur la figure 2.

Chaque unité 22 de détection peut correspondre par exemple à un organe optoélectronique de scrutation, comme un laser ou une caméra, apte à balayer sa zone locale 24 de détection.

Comme on peut le voir schématiquement sur la figure 2, les unités 22 de détection sont agencées les unes par rapport aux autres de sorte que leurs zones locales 24 de détection forment ensemble la zone 8 de détection s'étendant à 360° autour du véhicule.

A titre d'exemple, le véhicule 1 est sensiblement rectangulaire et comprend quatre unités 22 de détection agencées aux quatre coins du véhicule 1.

Comme on peut le voir sur la figure 2, chaque zone locale 24 de détection présente avantageusement au moins une portion 26 de recouvrement avec une zone locale 24 de détection adjacente.

Plus précisément, la zone 8 de détection périphérique peut comprendre au moins quatre portions 26 de recouvrement, dont une portion 26a de recouvrement avant située devant le véhicule 1, une portion 26b de recouvrement arrière située derrière le véhicule 1, et deux portions 26c de recouvrement latérales situées de chaque côté du véhicule 1.

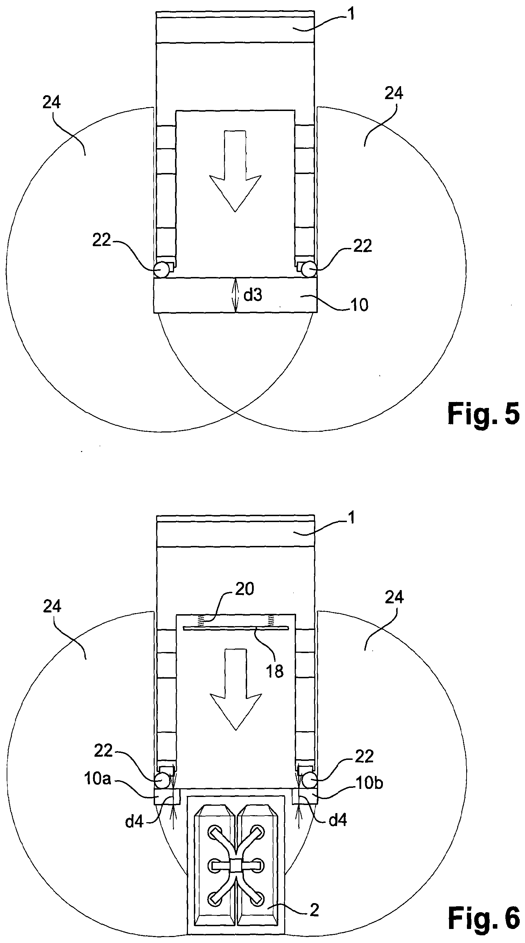

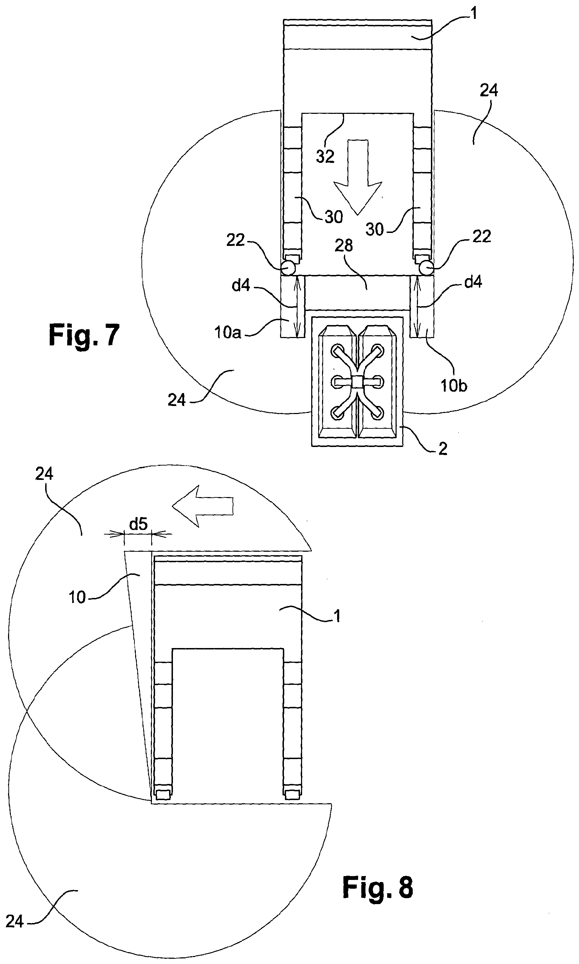

Comme on peut le voir sur la figure 3, le véhicule 1 se déplace en ligne droite. Sa vitesse est sensiblement plus élevée que lorsque le véhicule 1 se déplace en virage (figure 4) ou effectue une marche arrière (figure 5) ou une manoeuvre d'accostage (figures 6 et 7) ou un demi-tour (figure 8). La vitesse du véhicule 1 est par exemple de l'ordre de 25 km/h en ligne droite, de l'ordre de 7 km/h en virage, de l'ordre de 5 km/h en marche arrière et à l'intérieur des bâtiments, de l'ordre de 1km/h lors d'un demi-tour.

Il est ainsi possible de réduire les dimensions de la zone 10 de surveillance lorsque le véhicule circule en virage, ou effectue une marche arrière, une manœuvre d'accostage ou un demi-tour, si bien par exemple que le véhicule 1 ne détecte pas un objet comme une barrière 100 ou bordure délimitant un virage (figure 4), ce qui permet d'éviter des arrêts intempestifs, tout en garantissant un haut niveau de sécurité.

A titre d'exemples purement illustratifs, la zone 10 de surveillance en ligne droite s'étend en longueur à l'avant du véhicule 1 sur une distance d1 de l'ordre de 7 m au moins pour une vitesse du véhicule de l'ordre de 25 km/h, cette distance étant minimale par temps sec et augmentée par temps de pluie. En virage, la zone 10 de surveillance peut s'étendre sur une distance d2 de l'ordre de 1 m au moins pour une vitesse du véhicule de l'ordre de 7 km/h. Pour une marche arrière classique, c'est-à-dire hors manoeuvre d'accostage, la zone 10 de surveillance peut s'étendre sur une distance d3 de l'ordre de 60 cm pour une vitesse du véhicule de l'ordre de 5 km/h.

La largeur de la zone 10 de surveillance correspond sensiblement, pour la marche avant et la marche arrière hors manœuvre d'accostage, à la largeur du véhicule 1.

Pour les marches avant et arrière, la zone 10 de surveillance peut présenter une forme sensiblement rectangulaire, légèrement trapézoïdale pour permettre des croisements avec une distance de sécurité comme cela est visible sur les figures 3 et 4.

Pour un demi-tour, comme on peut le voir sur la figure 8, la zone 10 de surveillance peut présenter une forme sensiblement triangulaire, selon la partie du véhicule 1 qui est la plus éloignée de l'axe de rotation du demi-tour. L'un des côtés du triangle, s'étendant sensiblement perpendiculairement à l'un des côtés du véhicule 1, peut s'étendre sur une distance d5 de l'ordre de 20 cm. Un autre côté du triangle s'étend sensiblement sur toute la longueur du côté du véhicule 1 du côté duquel est effectué le demi-tour.

Lors d'une manoeuvre d'accostage, au cours de laquelle la vitesse est faible, la zone 10 de surveillance peut s'étendre sur une distance d4 de l'ordre de 10 cm.

La détection du fait que le véhicule effectue une manœuvre d'accostage et le calcul de la zone 10 de surveillance correspondante appropriée sont selon un autre exemple effectués par détection par les moyens de collecte et l'unité de traitement 16 que la vitesse du véhicule est comprise dans une certaine plage de vitesse prédéterminé. Cette plage de vitesse prédéterminée peut être comprise entre 0 et 3 km/h dans le sens de la manœuvre d'accostage, ici en marche arrière, et de préférence comprise entre 0.5 et 2 km/h.

Aussi, le véhicule peut comprendre un capteur de charge permettant d'envoyer à l'unité de traitement 16 l'information selon laquelle le véhicule est chargé ou non chargé. Pour le cas où le véhicule est chargé, l'unité de traitement 16 sait que le véhicule effectue un simple déplacement, ici une marche arrière, et non une manœuvre d'accostage même si la vitesse du véhicule est dans la plage de vitesse prédéterminée.

La détection du fait que le véhicule effectue une manœuvre d'accostage et le calcul de la zone 10 de surveillance correspondante appropriée sont selon un autre exemple effectués par détection par les moyens de collecte et l'unité de traitement 16 que la vitesse du véhicule correspond pendant une durée déterminée à une vitesse constante prédéfinie comme étant la vitesse d'accostage.

Dans ce cas, les données cinématiques permettant à l'unité 16 de traitement de déterminer que le véhicule effectue une manœuvre d'accostage et définir une zone 10 de surveillance appropriée lors d'une manœuvre d'accostage comprennent le maintien pendant une durée déterminée d'une vitesse constante prédéfinie. La vitesse constante prédéfinie est comprise entre 0.5 et 2.5 km/h, de préférence entre 1 et 2 km/h, et de préférence encore de l'ordre de 1.8 km/h, avec une tolérance de plus ou moins 0.5 km/h et de préférence de plus ou moins 0.1 km/h. La durée déterminée est comprise entre 0.1 et 2 secondes, et est de préférence inférieure à 1 seconde.

Comme cela est illustré schématiquement sur la figure 7, la zone 10 de surveillance comprend, lors d'une manœuvre d'accostage, une zone 28 inhibée prédéterminée, exempte de surveillance par les moyens de détection d'obstacle à distance, et située entre le véhicule 1 et la charge à accoster, en l'occurrence un ensemble 2 anodique. Ainsi, le véhicule 1 peut accoster la charge sans arrêt intempestif du fait d'une détection de la charge en tant qu'obstacle par les moyens de détection d'obstacle à distance.

Il est important de noter que le véhicule comprend en outre des moyens de détection d'obstacle par contact, par exemple un heurtoir 18 représenté schématiquement sur les figures 2 et 6, notamment en forme de plaque, relié au véhicule 1 par un ou plusieurs organes 20 de rappel.

Les moyens de détection d'obstacle par contact sont agencés sur une portion du véhicule destinée à faire face à la charge à accoster lors d'une manoeuvre d'accostage. Selon l'exemple des figures 1 à 8, les moyens de détection d'obstacle par contact sont donc visibles depuis l'arrière du véhicule.

Dès qu'un obstacle est heurté par les moyens de détection d'obstacle par contact, les moyens de freinage sont activés pour freiner et arrêter le véhicule.

Les moyens de détection d'obstacle par contact sont agencés pour détecter un obstacle qui serait situé dans la zone 28 inhibée.

Selon l'exemple des figures 1 à 8, le véhicule 1 comprend un châssis en forme de U comprenant deux portions 30 latérales sensiblement parallèles entre lesquelles s'étendent les moyens d'accostage et reliées par une portion 32 centrale.

Les moyens de détection d'obstacle par contact comprennent un premier organe de détection, comme un heurtoir 18, agencé à l'intérieur du U et relié à la portion 32 centrale, comme cela est visible sur la figure 2.

L'utilisation d'un heurtoir 18 interne a en outre un intérêt sécuritaire pour un démarrage en marche arrière d'un véhicule 1 qui était resté arrêté : une personne pourrait être entrée pendant l'arrêt dans la zone de chargement, c'est-à-dire à l'intérieur du U formé par la portion 32 centrale et les portions 30 latérales.

Les moyens de détection d'obstacle par contact peuvent aussi comprendre un deuxième organe de détection et un troisième organe de détection, comme des heurtoirs 18, agencés à l'extrémité des portions 30 latérales.

Il n'y a avantageusement pas de contact entre la charge et le premier organe de détection pendant la manœuvre d'accostage. Le véhicule 1 peut à cet effet comprendre des moyens, comme une butée (non représentée), pour empêcher un contact entre la charge et le premier organe de détection.

Comme cela est visible sur la figure 6, pendant la manoeuvre d'accostage, la zone 10 de surveillance peut être subdivisée en deux sous-zones 10a, 10b de surveillance séparées, s'étendant chacune depuis l'extrémité des portions 30 latérales, dans la direction du déplacement du véhicule 1. Comme cela est visible sur la figure 6, les deux sous-zones 10a, 10b de surveillance sont distantes l'une de l'autre, elles ne se chevauchent pas.

Les unités 22 de détection sans contact ont leur zone 10 de surveillance modifiée pour continuer à surveiller les côtés de la charge à accoster, en l'occurrence un ensemble anodique selon l'exemple de la figure 6.

Par ailleurs les sous-zones 10a, 10b de surveillance séparées peuvent s'étendre, comme visible sur la figure 7, depuis le véhicule jusque sur les côtés de la charge à accoster avant que la charge à accoster pénètre à l'intérieur du châssis en forme de U de sorte à prévenir une arrivée de piétons ou d'engins dans la zone 28 inhibée pendant la manœuvre d'accostage. Les distances d4 sur lesquelles s'étendent les sous-zones 10a, 10b de surveillance peuvent par exemple évoluer au cours de la manœuvre d'accostage, en diminuant au fur et à mesure de l'avancement de la manœuvre d'accostage. Une telle évolution peut être déterminée par exemple en fonction de l'avancement temporelle de la manœuvre d'accostage ou par détection que la charge à accoster a pénétré à l'intérieur du chassîs en forme de U.

Comme on peut le voir sur la figure 2, les unités 22 de détection peuvent être agencées sur les deux coins, avant gauche et avant droit, de la portion 32 centrale et aux deux extrémités des portions 30 latérales.

Le véhicule 1 peut avantageusement comprendre des moyens de reconnaissance de forme, destinés à reconnaître la forme de la charge à accoster lors d'une manœuvre d'accostage.

Ces moyens de reconnaissance de forme peuvent comprendre un ou plusieurs lasers agencés pour scruter une zone de chargement du véhicule, c'est-à-dire une zone parcourue par le véhicule lors d'une manœuvre d'accostage. Selon l'exemple des figures 1 à 8, la zone de chargement correspond à une zone arrière du véhicule, car la manœuvre d'accostage est effectuée en marche arrière.

Les moyens de reconnaissance de forme peuvent être confondus avec les moyens de détection d'obstacle à distance. En d'autres termes, le ou les lasers formant les moyens de reconnaissance de forme peuvent avantageusement se confondre avec le ou les lasers formant les unités 22 de détection à distance. Les moyens de reconnaissance de forme peuvent alternativement être totalement indépendant ou encore faire partie le cas échéant de moyens de guidage automatique décrits plus en détail ci-après.

Les moyens de détection d'obstacle à distance et les moyens de détection d'obstacle par contact sont par exemple agencés au maximum à 350 mm du sol, notamment à au plus 300 mm du sol, et de préférence à au plus 200 mm du sol.

Les moyens de détection d'obstacle à distance et les moyens de détection d'obstacle par contact peuvent notamment être agencés sous une hauteur correspondant à la hauteur d'une surface supérieure des roues 14 du véhicule 1.

Le véhicule 1 comprend avantageusement des moyens de guidage automatique pour se déplacer de façon autonome dans une usine d'électrolyse.

Ces moyens de guidage automatique peuvent comprendre par exemple un système SLAM (de l'anglais « Simultaneous Localisation And Mapping »). Ainsi, les moyens de guidage utilisent par exemple des télémètres lasers, des caméras, des capteurs ultrasons, et/ou des capteurs capacitifs, et une unité de mémorisation pouvant mémoriser une carte numérisée de l'usine d'électrolyse et/ou une cartographie des itinéraires sous forme de base de données.

Les moyens de détection d'obstacle à distance et les moyens de détection d'obstacle par contact sont avantageusement indépendants des moyens de guidage automatique. Par indépendants on entend que les moyens de détection d'obstacle (à distance et par contact) peuvent fonctionner en l'absence de fonctionnement des moyens de guidage automatique, et ne reçoivent aucune information provenant des moyens de guidage automatique pour définir les zones de surveillance et les actions sécuritaires à mettre en oeuvre. Les moyens de guidage automatique assurent un fonctionnement sécurisé du véhicule mais ce fonctionnement sécurisé dépend de processus complexes régissant les déplacements du véhicule. Les moyens de détection d'obstacle sont spécifiquement dédiés à la sécurité et s'ajoutent aux moyens de guidage automatique pour assurer un fonctionnement plus sécurisé du véhicule. En outre, l'indépendance entre les moyens de détection d'obstacle et les moyens de guidage automatique assure un fonctionnement parfaitement sécurisé du véhicule, notamment du fait que les moyens de détection d'obstacle ne dépendent pas du bon fonctionnement des moyens de guidage automatique.

Selon un autre aspect, la présente invention concerne aussi une usine d'électrolyse, notamment une aluminerie, comprenant au moins un véhicule 1 de manutention tel que précédemment décrit.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments.

## Revendications

1. Véhicule (1) de manutention comprenant des moyens d'accostage pour accoster une charge à déplacer, notamment un ensemble (2) anodique ou un récipient de coulée d'une usine d'électrolyse, dans lequel le véhicule (1) comprend :
- des moyens de détection d'obstacle à distance, aptes à balayer une zone (8) de détection adjacente au véhicule (1), la zone (8) de détection correspondant à la zone maximale qui peut être couverte par les moyens de détection d'obstacle à distance, les moyens de détection d'obstacle à distance comprenant une pluralité d'unités (22) de détection, chacune destinée à balayer une zone locale (24) de détection correspondant à une partie, figée, de la zone (8) de détection, les unités (22) de détection étant agencées les unes par rapport aux autres de sorte que leurs zones locales (24) de détection forment ensemble la zone (8) de détection s'étendant à 360° autour du véhicule (1),
- des moyens de collecte de donnée cinématique, destinés à collecter une ou plusieurs données concernant la cinématique du véhicule (1), le véhicule (1) comprenant en outre des moyens de détection d'obstacle par contact, agencés sur une portion du véhicule (1) destinée à faire face à la charge à accoster lors d'une manœuvre d'accostage, et **caractérisé en ce que** le véhicule comprend une unité (16) de traitement, destinée à définir, à l'intérieur de la zone (8) de détection, une zone (10) de surveillance à surveiller par les moyens de détection d'obstacle à distance, la zone (10) de surveillance étant non figée et correspondant à une partie de la zone (8) de détection, la forme de la zone (10) de surveillance étant calculée par l'unité (16) de traitement en fonction de la ou des données cinématiques fournies par les moyens de collecte, et des moyens de freinage, destinés à freiner et/ou arrêter le véhicule (1) dès qu'un obstacle est détecté dans la zone de surveillance ou est heurté par les moyens de détection d'obstacle par contact.

2. Véhicule selon la revendication 1, **caractérisé en ce que** chaque zone locale (24) de détection présente au moins une portion (26) de recouvrement avec une zone locale (24) de détection adjacente.

3. Véhicule (1) selon la revendication 2, **caractérisé en ce que** la zone (8) de détection périphérique comprend au moins quatre portions (26) de recouvrement, dont une portion (26a) de recouvrement avant située devant le véhicule (1), une portion (26b) de recouvrement arrière située derrière le véhicule (1), et deux portions (26c) de recouvrement latérales situées de chaque côté du véhicule (1).

4. Véhicule selon l'une des revendications 1 à 3, **caractérisé en ce que** l'unité (16) de traitement détermine à partir des données cinématiques que le véhicule (1) effectue une manœuvre d'accostage et définie une zone (10) de surveillance appropriée lors d'une manœuvre d'accostage.

5. Véhicule selon la revendication 4, **caractérisée en ce que** les données cinématiques permettant à l'unité de traitement de déterminer que le véhicule effectue une manœuvre d'accostage et définir une zone (10) de surveillance appropriée lors d'une manœuvre d'accostage sont une plage de vitesse prédéterminée dans le sens de la manœuvre d'accostage.

6. Véhicule selon la revendication 5, **caractérisé en ce que** la plage de vitesse prédéterminée est comprise entre 0 et 3 km/h et de préférence comprise entre 0.5 et 2 km/h.

7. Véhicule (1) selon l'une des revendications 1 à 6, **caractérisé en ce que** les données cinématiques permettant à l'unité (16) de traitement de déterminer que le véhicule effectue une manœuvre d'accostage et définir une zone (10) de surveillance appropriée lors d'une manœuvre d'accostage comprennent le maintien pendant une durée déterminée d'une vitesse constante prédéfinie.

8. Véhicule (1) selon la revendication 7, **caractérisé en ce que** la vitesse constante prédéfinie est comprise entre 0.5 et 2.5 km/h, de préférence entre 1 et 2 km/h, de préférence encore de l'ordre de 1.8 km/h.

9. Véhicule selon l'une des revendications 7 à 8, **caractérisé en ce que** la durée déterminée est comprise entre 0.1 et 2 secondes, et est de préférence inférieure à 1 seconde.

10. Véhicule (1) selon l'une des revendications 1 à 9, **caractérisé en ce que** la zone (10) de surveillance comprend, lors d'une manœuvre d'accostage, une zone (28) inhibée prédéterminée exempte de surveillance par les moyens de détection d'obstacle à distance, la zone (28) inhibée étant située entre le véhicule (1) et la charge à accoster, et les moyens de détection d'obstacle par contact sont agencés pour détecter un obstacle dans la zone (28) inhibée.

11. Véhicule (1) selon la revendication 10, **caractérisé en ce que** la zone (10) de surveillance comporte au moins deux sous-zones (10a, 10b) de surveillance qui s'étendent le long de la zone (28) inhibée.

12. Véhicule (1) selon l'une des revendications 1 à 11, **caractérisé en ce que** le véhicule (1) comprend un châssis en forme de U comprenant deux portions (30) latérales sensiblement parallèles entre lesquelles s'étendent les moyens d'accostage et reliées par une portion (32) centrale, et les moyens de détection d'obstacle par contact comprennent un premier organe de détection agencé à l'intérieur du U sur la portion (32) centrale.

13. Véhicule (1) selon la revendication 12, **caractérisé en ce que** les moyens de détection d'obstacle par contact comprennent un deuxième organe de détection et un troisième organe de détection agencés à l'extrémité des portions (30) latérales.

14. Véhicule (1) selon la revendication 12 ou 13, **caractérisé en ce que** la zone (10) de surveillance comprend au cours d'une manœuvre d'accostage deux sous-zones (10a, 10b) de surveillance séparées et s'étendant chacune depuis l'extrémité des portions (30) latérales dans une direction sensiblement parallèle à la direction de déplacement du véhicule (1).

15. Véhicule (1) selon la revendication 14, **caractérisé en ce que** les sous-zones (10a, 10b) de surveillance séparées s'étendent depuis le véhicule jusque sur les côtés de la charge à accoster avant que la charge à accoster pénètre à l'intérieur du châssis en forme de U.

16. Véhicule (1) selon l'une des revendications 1 à 15, **caractérisé en ce que** le véhicule comprend des moyens de guidage automatique pour se déplacer de façon autonome dans une usine d'électrolyse, et les moyens de détection d'obstacle à distance et les moyens de détection d'obstacle par contact sont indépendants des moyens de guidage automatique.

17. Usine d'électrolyse, notamment aluminerie, comprenant un véhicule (1) de manutention selon l'une des revendications 1 à 16.

## Patentansprüche

1. Handhabungsfahrzeug (1), umfassend Andockmittel zum Andocken an eine zu bewegende Last, insbesondere eine Anodenanordnung (2) oder einen Gussbehälter einer Elektrolyseanlage, wobei das Fahrzeug (1) umfasst:
- Mittel zur Ferndetektion eines Hindernisses, die zum Absuchen einer Detektionszone (8) geeignet sind, die an das Fahrzeug (1) angrenzt, wobei die Detektionszone (8) der maximalen Zone entspricht, die von den Mitteln zur Ferndetektion eines Hindernisses abgedeckt werden kann, wobei die Mittel zur Ferndetektion eines Hindernisses eine Vielzahl von Detektionseinheiten (22) umfassen, die jeweils dazu bestimmt sind, eine lokale Detektionszone (24) abzusuchen, die einem festen Teil der Detektionszone (8) entspricht, wobei die Detektionseinheiten (22) zueinander so angeordnet sind, dass ihre lokalen Detektionszonen (24) zusammen die Detektionszone (8) bilden, die sich 360° um das Fahrzeug (1) herum erstreckt,
- Mittel zur Sammlung kinematischer Daten, die dazu bestimmt sind, ein oder mehrere Daten betreffend die Kinematik des Fahrzeugs (1) zu sammeln, wobei das Fahrzeug (1) weiter Mittel zur Detektion eines Hindernisses durch Kontakt umfasst, die auf einem Abschnitt des Fahrzeugs (1) angeordnet sind, der dazu bestimmt ist, der anzudockenden Last bei einem Andockmanöver gegenüberzutreten, und **dadurch gekennzeichnet, dass** das Fahrzeug eine Verarbeitungseinheit (16) umfasst, die dazu bestimmt ist, innerhalb der Detektionszone (8) eine Überwachungszone (10) zu definieren, die durch die Mittel zur Ferndetektion eines Hindernisses zu überwachen ist, wobei die Überwachungszone (10) nicht fest ist, und einem Teil der Detektionszone (8) entspricht, wobei die Form der Überwachungszone (10) durch die Verarbeitungseinheit (16) in Abhängigkeit von dem oder den kinematischen Daten berechnet wird, die durch die Mittel zur Sammlung bereitgestellt werden, und Bremsmittel, die dazu bestimmt sind, das Fahrzeug (1) zu bremsen und/oder anzuhalten, sobald ein Hindernis in der Überwachungszone detektiert wird oder durch die Mittel zur Detektion eines Hindernisses durch Kontakt angestoßen wird.

2. Fahrzeug (1) nach Anspruch 1, **dadurch gekennzeichnet, dass** jede lokale Detektionszone (24) mindestens einen Überschneidungsabschnitt (26) mit einer angrenzenden lokalen Detektionszone (24) aufweist.

3. Fahrzeug nach Anspruch 2, **dadurch gekennzeichnet, dass** die umlaufende Detektionszone (8) mindestens vier Überschneidungsabschnitte (26) umfasst, davon einen vorderen Überschneidungsabschnitt (26a), der sich vor dem Fahrzeug (1) befindet, einen hinteren Überschneidungsabschnitt (26b), der sich hinter dem Fahrzeug (1) befindet, und zwei seitliche Überschneidungsabschnitte (26c), die sich auf jeder Seite des Fahrzeugs (1) befinden.

4. Fahrzeug nach einem der Ansprüche 1 bis 3, **dadurch gekennzeichnet, dass** die Verarbeitungseinheit (16) ausgehend von den kinematischen Daten bestimmt, dass das Fahrzeug (1) ein Andockmanöver durchführt, und eine angemessene Überwachungszone (10) bei einem Andockmanöver definiert.

5. Fahrzeug nach Anspruch 4, **dadurch gekennzeichnet, dass** die kinematischen Daten, die es der Verarbeitungseinheit ermöglichen, zu bestimmen, dass das Fahrzeug ein Andockmanöver durchführt, und eine angemessene Überwachungszone (10) bei einem Andockmanöver zu definieren, ein vorbestimmter Geschwindigkeitsbereich in der Richtung des Andockmanövers sind.

6. Fahrzeug nach Anspruch 5, **dadurch gekennzeichnet, dass** der vorbestimmte Geschwindigkeitsbereich zwischen 0 und 3 km/h, und vorzugsweise zwischen 0,5 und 2 km/h umfasst ist.

7. Fahrzeug (1) nach einem der Ansprüche 1 bis 6, **dadurch gekennzeichnet, dass** die kinematischen Daten, die es der Verarbeitungseinheit (16) ermöglichen, zu bestimmen, dass das Fahrzeug ein Andockmanöver durchführt, und eine angemessene Überwachungszone (10) bei einem Andockmanöver zu definieren, die Aufrechterhaltung einer vordefinierten konstanten Geschwindigkeit während einer bestimmten Dauer umfassen.

8. Fahrzeug (1) nach Anspruch 7, **dadurch gekennzeichnet, dass** die vordefinierte konstante Geschwindigkeit zwischen 0,5 und 2,5 km/h, vorzugsweise zwischen 1 und 2 km/h umfasst ist, besonders bevorzugt in etwa 1,8 km/h beträgt.

9. Fahrzeug nach einem der Ansprüche 7 bis 8, **dadurch gekennzeichnet, dass** die bestimmte Dauer zwischen 0,1 und 2 Sekunden umfasst ist, und vorzugsweise kürzer ist als 1 Sekunde ist.

10. Fahrzeug (1) nach einem der Ansprüche 1 bis 9, **dadurch gekennzeichnet, dass** die Überwachungszone (10) bei einem Andockmanöver eine vorbestimmte Sperrzone (28) umfasst, die frei von einer Überwachung durch die Mittel zur Ferndetektion eines Hindernisses ist, wobei sich die Sperrzone (28) zwischen dem Fahrzeug (1) und der anzudockenden Last befindet, und die Mittel zur Detektion eines Hindernisses durch Kontakt angeordnet sind, um ein Hindernis in der Sperrzone (28) zu detektieren.

11. Fahrzeug (1) nach Anspruch 10, **dadurch gekennzeichnet, dass** die Überwachungszone (10) mindestens zwei Überwachungsunterzonen (10a, 10b) beinhaltet, die sich entlang der Sperrzone (28) erstrecken.

12. Fahrzeug (1) nach einem der Ansprüche 1 bis 11, **dadurch gekennzeichnet, dass** das Fahrzeug (1) ein Fahrgestell in U-Form umfasst, das zwei im Wesentlichen parallele seitliche Abschnitte (30) umfasst, zwischen denen sich die Andockmittel erstrecken und die durch einen mittleren Abschnitt (32) verbunden sind, und die Mittel zur Detektion eines Hindernisses durch Kontakt ein erstes Detektionsorgan umfassen, das innerhalb des U auf dem mittleren Abschnitt (32) angeordnet ist.

13. Fahrzeug (1) nach Anspruch 12, **dadurch gekennzeichnet, dass** die Mittel zur Detektion eines Hindernisses durch Kontakt ein zweites Detektionsorgan und ein drittes Detektionsorgan umfassen, die am Ende der seitlichen Abschnitte (30) angeordnet sind.

14. Fahrzeug (1) nach Anspruch 12 oder 13, **dadurch gekennzeichnet, dass** die Überwachungszone (10) während eines Andockmanövers zwei Überwachungsunterzonen (10a, 10b) umfasst, die getrennt sind und sich jeweils von einem Ende der seitlichen Abschnitte (30) in einer Richtung erstrecken, die im Wesentlichen parallel zur Bewegungsrichtung des Fahrzeugs (1) verläuft.

15. Fahrzeug (1) nach Anspruch 14, **dadurch gekennzeichnet, dass** sich die getrennten Überwachungsunterzonen (10a, 10b) von dem Fahrzeug bis auf die Seiten der anzudockenden Last erstrecken, bevor die anzudockende Last in das Fahrgestell in U-Form eindringt.

16. Fahrzeug (1) nach einem der Ansprüche 1 bis 15, **dadurch gekennzeichnet, dass** das Fahrzeug Mittel zur automatischen Führung umfasst, um sich auf autonome Weise in einer Elektrolyseanlage zu bewegen, und die Mittel zur Ferndetektion eines Hindernisses und die Mittel zur Detektion eines Hindernisses durch Kontakt unabhängig von den Mitteln zur automatischen Führung sind.

17. Elektrolyseanlage, insbesondere Aluminiumhütte, umfassend ein Handhabungsfahrzeug (1) nach einem der Ansprüche 1 bis 16.

## Claims

1. A handling vehicle (1) comprising docking means for docking a load to be displaced, in particular an anode assembly (2) or a casting vessel of an electrolysis plant, wherein the vehicle (1) comprises:
- means for remotely detecting obstacles, able to scan a detection area (8) adjacent to the vehicle (1), the detection area (8) corresponding to the maximum area which can be covered by the remote obstacle detection means, the remote obstacle detection means comprising a plurality of detection units (22), each intended to scan a local detection area (24) corresponding to a fixed part of the detection area (8), the detection units (22) being arranged relative to each other so that their local detection areas (24) form together the detection area (8) extending 360° around the vehicle (1),
- means for collecting kinematic data, intended to collect one or several data concerning the kinematics of the vehicle (1), the vehicle (1) further comprising means for detecting obstacles by contact, arranged on a portion of the vehicle (1) intended to face the load to be docked during a docking maneuver, and **characterized in that** the vehicle comprises a processing unit (16) intended to define, within the detection area (8), a monitoring area (10) to be monitored by the remote obstacle detection means, the monitoring area (10) being non-fixed and corresponding to a part of the detection area (8), the shape of the monitoring area (10) being calculated by the processing unit (16) as a function of the kinematic data provided by the collection means, and braking means, intended to brake and/or to stop the vehicle (1) as soon as an obstacle is detected in the monitoring area or is struck by the contact obstacle detection means.

2. The vehicle according to claim 1, **characterized in that** each local detection area (24) has at least one portion (26) overlapping with an adjacent local detection area (24).

3. The vehicle (1) according to claim 2, **characterized in that** the peripheral detection area (8) comprises at least four overlapping portions (26), whose a front overlapping portion (26a) located in front of the vehicle (1), a rear overlapping portion (26b) located behind the vehicle (1), and two lateral overlapping portions (26c) located on each side of the vehicle (1).

4. The vehicle according to any of claims 1 to 3, **characterized in that** the processing unit (16) determines from the kinematic data that the vehicle (1) performs a docking maneuver and defines an appropriate monitoring area (10) during a docking maneuver.

5. The vehicle according to claim 4, **characterized in that** the kinematic data enabling the processing unit to determine whether the vehicle performs a docking maneuver and to define an appropriate monitoring area (10) during a docking maneuver are a predetermined speed range in the direction of the docking maneuver.

6. The vehicle according to claim 5, **characterized in that** the predetermined speed range is comprised between 0 and 3 km/h and preferably comprised between 0.5 and 2 km/h.

7. The vehicle (1) according to any of claims 1 to 6, **characterized in that** the kinematic data enabling the processing unit (16) to determine whether the vehicle performs a docking maneuver and to define an appropriate monitoring area (10) during a docking maneuver comprise the maintaining for a predetermined period of time a predefined constant speed.

8. The vehicle (1) according to claim 7, **characterized in that** the predefined constant speed is comprised between 0.5 and 2.5 km/h, preferably between 1 and 2 km/h, more preferably in the range of 1.8 km/h.

9. The vehicle according to any of claims 7 to 8, **characterized in that** the predetermined period of time is comprised between 0.1 and 2 seconds, and is preferably less than 1 second.

10. The vehicle (1) according to any of claims 1 to 9, **characterized in that** the monitoring area (10) comprises, during a docking maneuver, a predetermined prohibited area (28) exempt from monitoring by the remote obstacle detection means, the prohibited area (28) being located between the vehicle (1) and the load to be docked, and the contact obstacle detection means are arranged to detect an obstacle in the prohibited area (28).

11. The vehicle (1) according to claim 10, **characterized in that** the monitoring area (10) includes at least two monitoring sub-areas (10a, 10b) which extend along the prohibited area (28).

12. The vehicle (1) according to any of claims 1 to 11, **characterized in that** the vehicle (1) comprises a U-shaped frame comprising two substantially parallel lateral portions (30) between which the docking means extend and connected by a central portion (32), and the contact obstacle detection means comprise a first detection member arranged inside the U on the central portion (32).

13. The vehicle (1) according to claim 12, **characterized in that** the contact obstacle detection means comprise a second detection member and a third detection member arranged at the end of the lateral portions (30).

14. The vehicle (1) according to claim 12 or 13, **characterized in that** the monitoring area (10) comprises, during a docking maneuver, two separate monitoring sub-areas (10a, 10b) each extending from the end of the lateral portions (30) in a direction substantially parallel to the direction of displacement of the vehicle (1).

15. The vehicle (1) according to claim 14, **characterized in that** the separate monitoring sub-areas (10a, 10b) extend from the vehicle up to the sides of the load to be docked before the load to be docked enters into the U-shaped frame.

16. The vehicle (1) according to any of claims 1 to 15, **characterized in that** the vehicle comprises automatic guide means for autonomously displacing in an electrolysis plant, and the remote obstacle detection means and the contact obstacle detection means are independent of the automatic guide means.

17. An electrolysis plant, in particular an aluminum smelter, comprising a handling vehicle (1) according to any of claims 1 to 16.
